# EUROPÄISCHE PATENTSCHRIFT

(11) **EP 1 127 788 B1**
(45) Veröffentlichungstag und Bekanntmachung des Hinweises auf die Patenterteilung: **28.09.2005**
(21) Anmeldenummer: 01104082.1
(22) Anmeldetag: 21.02.2001
(51) Int. Cl.: B64D 11/00, B64D 11/06

(54) **Passagiervorrichtung in einer Flugzeugpassagierkabine**
Aircraft cabin passenger layout
Disposition de passagers dans la cabine d'un aéronef

(30) Priorität: 23.02.2000 DE 10008259
(43) Veröffentlichungstag der Anmeldung: 29.08.2001
(73) Patentinhaber: Airbus Deutschland GmbH, 21129 Hamburg (DE); Deutsche Lufthansa AG, 50679 Köln (DE)
(72) Erfinder: Angerami, Jade Gaeta, 17043-340 Bauru, Sao Paulo (BR); Baatz, Andreas, Dipl-.-Ing., 21644 Sauensiek (DE); Hiesener, Stefan, Dr., 21614 Buxtehude (DE); Merensky, Harald, Dipl.-Ing., 22359 Hamburg (DE)
(74) Vertreter: Hansmann, Dierk

(56) Entgegenhaltungen:
- DE-C- 19 814 548
- US-A- 4 589 612
- US-A- 4 913 487
- "Lockheed Defines Sleeping Quarters For NASA's Space Station" AVIATION WEEK & SPACE TECHNOLOGY, 3. Dezember 1984 (1984-12-03), Seite 125 XP002169206

## Beschreibung

Die Erfindung betrifft eine Passagiertransportvorrichtung in einer Flugzeugpassagierkabine.

Wie aus dem Stand der Technik zum Transport von Passagieren in einem Verkehrsflugzeug hervorgeht, sind als Transportmittel Flugzeugsitze innerhalb einer Passagierkabine vorgesehen. Zumindest für die Start- und Landephase eines Flugzeuges müssen die Sitze von den Passagieren aufgesucht und die Sicherheitsgurte angelegt werden, um eine ausreichende Sicherheit im Falle eines Crashes oder einer harten Landung gewährleisten zu können. Aber auch während des Fluges ist ein Verbleiben auf den Flugzeugsitzen erwünscht, da aufgrund der Platzverhältnisse Flugzeuggänge und Serviceeinrichtungen, wie Toiletten ebenfalls sehr beengt ausgeführt sind und weiterhin bei Turbulenzen im Reiseflug ein schnelles Sichern des Passagiers am Platz möglich ist. Für den Komfort eines Fluggastes ist es somit wesentlich, daß Flugzeugsitze innerhalb der Passagierkabine mit einem ausreichenden Sitzabstand und einer ausreichenden Sitzbreite angeordnet sind. Demgegenüber ist es Ziel der Flugzeugbetreiber, soviel Fluggäste wie möglich in der Passagierkabine unterzubringen, um so die Transportkosten je Fluggast zu minimieren. Dieser Umstand führt natürlich zu einem Kompromiß, die zur Verfügung stehende Sitzfläche für einen Passagier so zu optimieren, daß ausreichend Platz zu einem noch vertretbaren Preis angeboten werden kann.
Aus US 5, 611, 503 ist beispielsweise ein recht aufwendiges Verfahren bekannt, Sitzkonfigurationen in einer Passagierkabine zu optimieren, die einen größtmöglichen Komfort für die Passagiere bei Maximierung der Anzahl der Passagiersitze bieten. Die Sitzreihenkonfiguration mit dem höchsten Komfort wird dann in der Passagierkabine verwendet.
Aus DE 195 34 024 C2 ist eine Sitzgruppe für eine Passagierkabine eines Flugzeuges bekannt, die eine Sitzverbreiterung für einen Sitz ermöglicht, wenn es zur Belegung dieses Sitzplatzes kommt, aber im ungenutzten Zustand Sitze "schrumpfen" können und so anderen Passagieren ein komfortableres Reisen zu ermöglichen.
Die bekannten Transporteinrichtungen für Passagiere in Flugzeugen weisen als Gemeinsamkeit Passagiersitze auf, die aufgrund der Passagiergröße Mindestsitzbreiten bzw. Mindestsitzabstände benötigen. Somit ist innerhalb einer Passagierkabine mit festen Abmessungen eine berechenbare maximale Anzahl von Passagiersitzen möglich. Nur wenn keine volle Belegung der Passagiersitze mit Fluggästen erfolgt, erhöht sich die zur Verfügung stehende Sitzfläche je Fluggast und somit der Komfort für die Passagiere.

Aus DE 198 14 548, welche als nachstliegender Stand der Technik betrachtet wird ist bekannt, den Platzbedarf bei einer Personenbeförderung in Fahrzeugen wie Busse, Schienenfahrzeuge oder Fähren zu verringern, indem an Gestänge festgelegte Sitzstützen vorgesehen sind. Zur Erhöhung der Sicherheit sind Haltegriffe sowie die Rückenlehne der Sitzstütze jeweils als Aufprallschutz vorgesehen für die in Fahrtrichtung dahinterliegende Reihe von Fahrgästen. Für die Anwendung in Flugzeugen ist ein solche Personenbeförderung nicht denkbar. Die Sicherheitsvorschriften im Flugzeug sind so streng, daß eine Personenbeförderung - anders als bei Bodenfahrzeugen - derzeit nur in Flugzeugsitzen erlaubt ist, die vorbestimmte Beschleunigungen in horizontaler und vertikaler Richtung aufnehmen können und im Crashfall Energie absorbieren können. Zusätzlich stehend, beispielsweise wie in Bussen oder Schienenfahrzeugen seit langem üblich, können in einer Flugzeugpassagierkabine keine Passagiere transportiert werden.

Der Erfindung liegt daher die Aufgabe zugrunde, den für den Transport eines Passagiers notwendigen Platz innerhalb einer Flugzeugpassagierkabine zu minimieren und somit die mögliche Anzahl der maximal zu transportierenden Passagiere zu erhöhen. Trotz einer Kapazitätserhöhung ist der größtmögliche Komfort und eine ausreichende Bewegungsfreiheit für die Fluggäste zu erreichen. Eine ausreichende Sicherheit ist zu gewährleisten, um im Crashfall oder bei Turbulenzen den Sicherheitsforderungen zu genügen.

Diese Aufgabe wird bei einer gattungsgemäßen Passagiertransportvorrichtung durch die im Patentanspruch 1 genannten Maßnahmen gelöst.

Dabei ist insbesondere vorteilhaft, daß erstmalig ein völlig neues Transportkonzept innerhalb von Flugzeugpassagierkabinen ermöglicht wird und mit der Anordnung von Stehplätzen in Verkehrsflugzeugen der notwendige Platz je Passagier minimiert werden kann und somit die mögliche Anzahl der maximal zu transportierenden Passagiere erhöht wird.
Mittels der Halteeinrichtungen werden zumindest im notwendigen Sicherungsfall während der Start- und Landephase bzw. während Turbulenzen im Reiseflug der zu transportierenden Passagiere in einer aufrechten Position gehalten und mittels Sicherungsmittel gesichert.

Weiterbildungen und vorteilhafte Ausgestaltungen sind in den Unteransprüchen 2 bis 9 angegeben.

Mit der Anordnung der Passagiertransportvorrichtung gemäß der Ansprüche 2 bzw. 3 können Kabinenlayouts einer Flugzeugpassagierkabine an vielfältige Anforderungen flexibel angepaßt werden und eine optimale Raumausnutzung innerhalb der Kabine kann erreicht werden.

Die Maßnahme gemäß des Anspruchs 4 ermöglicht eine geordnete, für einen Passagier leicht zu findende Anordnung von Stehplätzen. Damit kann das Ein- und Aussteigen der Passagiere beschleunigt werden, was die Boden- bzw. Haltezeit für ein Transportmittel erheblich verringert.

Mit der Ausgestaltung gemäß der Ansprüche 5 oder 6 ist in vorteilhafter Weise ermöglicht, daß die bei einem Crash auftretenden Kräfte den Passagier mit einem großen Flächenbereich an die Halteeinrichtung drücken und damit das Verletzungsrisiko und die Belastung des Körpers gesenkt wird.

Die Maßnahmen gemäß des Ansprüche 6 und 7 zeigen eine vorteilhafte Ausgestaltung einer Stützstruktur, die gegenüber heutigen Transporteinrichtungen im Flugzeug eine erhöhte Sicherheit bietet.

Mit der Ausgestaltung der erfindungsgemäßen Passagiertransportvorrichtung gemäß der Anspruchs 9 ist eine Entlastung bei einem längeren Stehen ermöglicht, was den Komfort für den Passagier erhöht.

In der Zeichnung sind Ausführungsbeispiele der Erfindung dargestellt, die nachstehend anhand der Figuren 1 bis 4 näher beschrieben sind. In den Figuren sind gleiche Bauteile mit gleichen Bezugszeichen versehen.

Es zeigen:
- Fig. 1: eine Draufsicht auf ein Kabinenlayout einer Flugzeugpassagierkabine,
- Fig. 2: eine Perspektivdarstellung einer Flugzeugpassagierkabine mit vorgesehenen Stehplätzen,
- Fig. 3: eine Darstellung der Positionierung des Stehplatzes zur Flugrichtung und
- Fig. 4: eine mögliche Ausführungsform einer Stützstruktur einer Passagiertransportvorrichtung.

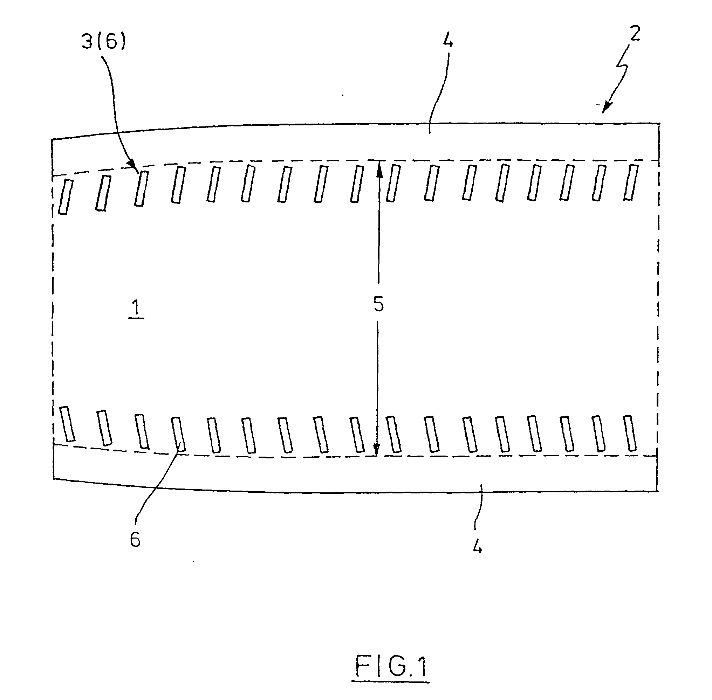

In Fig. 1 ist eine Draufsicht auf ein mögliches Kabinenlayout 1 eines Passagiertransportmittels, vorzugsweise eines Passagierflugzeuges gezeigt. Das Kabinenlayout 1 dieser Passagierkabine 2 umfaßt Passagiertransportvorrichtungen 3, die erfindungsgemäß als Stehplätze 6 ausgebildet sind. So ist im Kabinenlayout 1 ersichtlich, daß es Bereiche 4 innerhalb der Passagierkabine 2 gibt, die aufgrund der niedrigeren Kabinendeckenhöhe nur Sitzanordnungen zulassen. Die Bereiche 4 sind im gezeigten Kabinenlayout 1 nahe der Außenwandung des Flugzeuges - wenn eine Mindeststehhöhe nicht erreichbar ist - vorgesehen. Im Bereich 5 ist aufgrund der Abmessungen der Kabinendeckenhöhe eine Mindeststehhöhe erreicht und es ist möglich, als Passagiertransportvorrichtungen 3 Stehplätze 6 vorzusehen. Im Bereich 5 können bedarfsweise somit Stehplätze 6 oder auch an sich bekannte Flugzeugsitze vorgesehen sein.

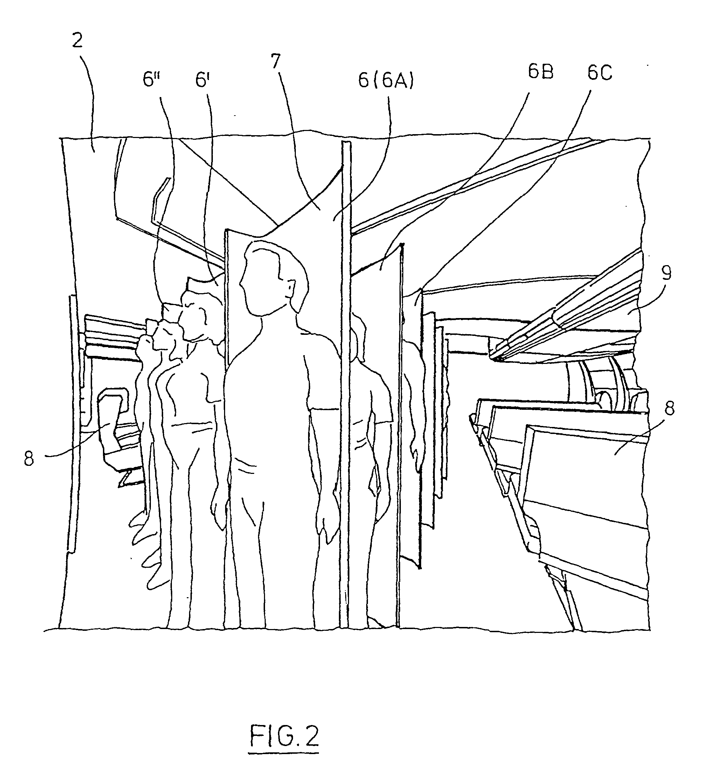

In Fig. 2 ist in einer Perspektivdarstellung eine Passagierkabine 2 mit darin angeordneten Stehplätzen 6 und Sitzplätzen 8 ersichtlich. Bei einer Anordnung von Gepäckfächern 9 im Kopf- bzw. Überkopfbereich der Passagiere sind unterhalb dieser Gepäckfächer 9 normalerweise Sitzplätze 8 angeordnet, da die Mindeststehhöhe nicht gegeben ist. Für ein Anordnen von Stehplätzen 6 im Bereich 5 kann es möglicherweise notwendig sein, Gepäckablagen 9 im Überkopfbereich zu vermeiden, um so eine ausreichende Stehhöhe zu erhalten. Für die Sicherheit der Passagiere ist es notwendig, insbesondere für die Start- und Landephase, Mittel vorzusehen, die den Passagier in eine vorgegebene Bewegungshaltung bringen und so eine Verletzungsgefahr bei möglichen Crashs zu verhindern. Die vorgegebene Bewegungshaltung ist im wesentlichen im Unterschied zur sitzenden Haltung auf einem Flugzeugsitz 8 für einen Stehplatz 6 eine eher aufrechte Haltung. Zum Erreichen dieser Haltung ist eine Halteeinrichtung 7 vorgesehen, die beispielsweise als Stütze, Lehne oder Stützwand ausgebildet sein kann. Die Halteeinrichtung 7 dient einerseits zur Lagebestimmung und Definition des Stehplatzes, gewährleistet einen sicherheitsrelevanten Halt für die Passagiere während des gesamten Fluges, insbesondere aber für die Start- und Landephase oder bei Turbulenzen im Reiseflug, und kann andererseits auch für die Unterbringung von Notausrüstungen sowie von Sicherheitsanweisungen oder auch von Serviceeinrichtungen, wie Leseleuchten oder Flugbegleiterruftaste dienen. In der gezeigten Ausführungsform sind mehrere Stehplätze 6, 6', 6" nebeneinander und auch mehrere Stehplatzreihen 6A, 6B, 6C ... hintereinander angeordnet. Mit einer solchen Stehplatzanordnung ist eine optimale Platzausnutzung in der Passagierkabine erreicht, da die für einen Stehplatz notwendige Fläche kleiner als eine notwendige Kabinenfläche für einen Sitzplatz ausfallen kann.

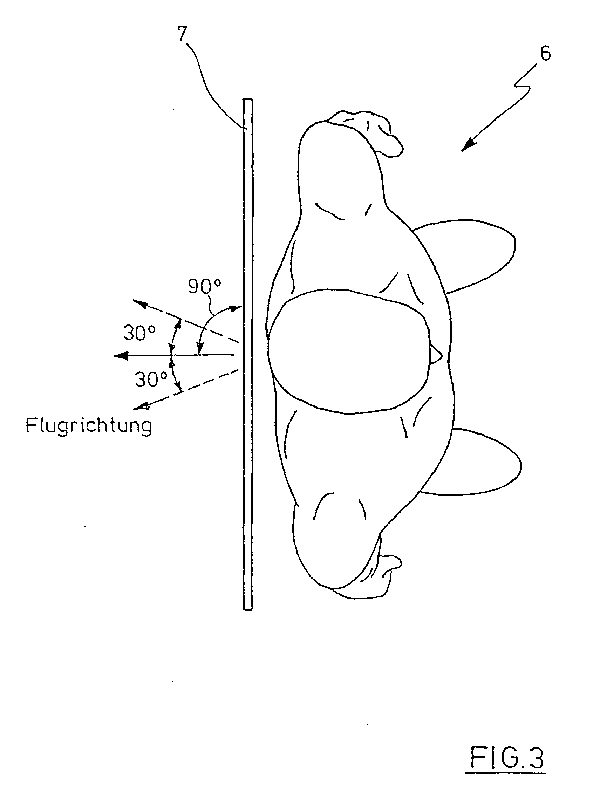

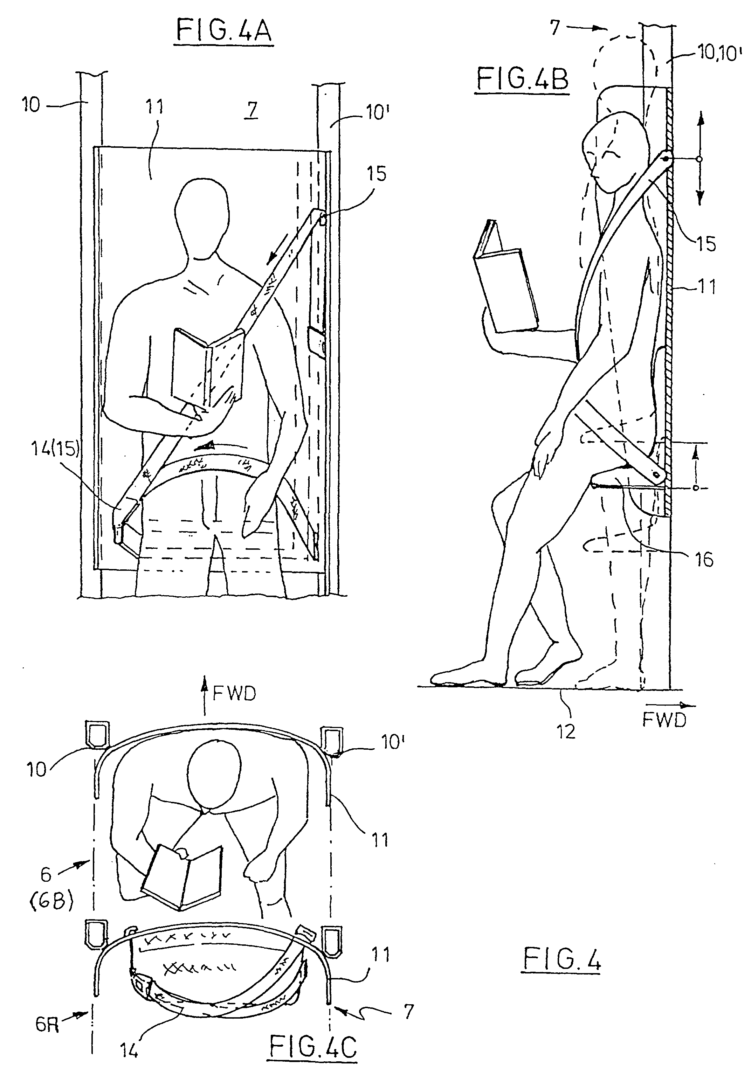

Eine in Fig. 3 gezeigte Anordnung der Stehplätze 6 ist vorteilhaft, da die Passagiere insbesondere für die Start- und Landephase entgegen der Flugzeugflugrichtung stehen bzw. in aufrechter Haltung gehalten werden und so im Falle eines Crashs das Verletzungsrisiko der Passagiere durch Aufschlagen auf andere ) Einrichtungsgegenstände vermindert und ein Passagier durch die auftretenden Kräfte an die Halteeinrichtung 7 gedrückt wird. Die Halteeinrichtung 7 kann in der Passagierkabine 2 entweder senkrecht zur Flugrichtung oder in einem gewissen Winkel (etwa bis ca. 30°) abweichend von dieser Senkrechten ausgerichtet sein.
Die Halteeinrichtung 7 muß als Stützstruktur ausgebildet sein, die unter anderem Sicherheitsmittel umfaßt, wobei die Stützstruktur die notwendigen Lasten bei einem Crash aufnehmen und/oder weiterleiten muß. Dabei sind Beschleunigungen in horizontaler und vertikaler Richtung aufzunehmen. Für ein entspannteres Stehen, insbesondere auch zur Anwendung während des Reisefluges, kann eine Stehilfe vorgesehen werden. Eine Ausgestaltung einer möglichen Stützstruktur 7 ist nachfolgend in Fig. 4 gezeigt.

In Fig. 4 ist in drei Ansichten (Fig. 4A, Fig. 4B, Fig. 4C) eine mögliche Stützstruktur 7 für einen Stehplatz 6 ersichtlich. Die Stützstruktur 7 kann Stützprofile 10, 10' und eine dazwischenliegende Stützwand 11 aufweisen. Die Stützprofile 10, 10' sind in der gezeigten Ausführung zwischen dem Kabinenfußboden 12 und der Kabinendecke 13 angeordnet und stützen sich an strukturfesten Bauteilen in der Passagierkabine 2 des Flugzeuges ab. Die Stützprofile 10, 10' nehmen im Crashfall im wesentlichen die zu absorbierende Energie auf. Der Abstand zwischen den Stützprofilen 10 und 10' ist bevorzugt so gewählt, daß die Stützwand 11 eine ausreichende Breite für einen Passagier bietet. An den Stützprofilen 10, 10' und/oder der Stützwand 11 sind Sicherheitsmittel 14 vorgesehen. Die Sicherheitsmittel 14 können bevorzugt als Drei-Punkt-Sicherheitsgurte 15 ausgebildet sein, was gegenüber herkömmlichen Passagiersitzen eine höhere Sicherheit für die Passagiere bietet.
Zur Anwendung können an sich bekannte Sicherheitsgurte bzw. Sicherheitssysteme kommen, die aus dem Stand der Technik in vielen Anwendungen bekannt sind.

In Fig. 4C, in der Ansicht von oben auf den Stehplatz 6 ist ersichtlich, daß die Stützwand 11 eine zur Aufnahme des Passagiers vorgesehene schalenförmige Form aufweist und somit eine Abschirmung und ein Schutz der Privatsphäre vom benachbarten Stehplatz ermöglicht wird. Auch ist es möglich, die Stützwand 11 bzw. die Sicherheitsmittel 14 an der Stützwand 11 höhenverstellbar auszuführen, beispielsweise mittels Schienen in den Stützprofilen 10 und 10', in denen die Stützwand 11 verschiebbar und arretierbar ist. So ist eine Anpassung an unterschiedliche Größen der Passagiere möglich.

Eine weitere vorteilhafte Ausgestaltung ist in der Fig. 4B ersichtlich. Für ein entspannteres Stehen können Mittel vorgesehen sein, die zwar eine aufrechte Haltung des Passagiers aber auch eine Entlastung der Beine ermöglichen. So ist ein Hilfssitz 16 vorgesehen, der zwar kein Sitzen, sondern eher ein Abstützen des Passagiers und damit eine Entlastung der Beine vom Gewicht des Passagiers ermöglicht. Auch der Hilfssitz 16 kann entsprechend der jeweiligen Größe des Passagiers höhenverstellbar ausgeführt sein.

### Bezugszeichenliste

- 1 -: Kabinenlayout einer Passagierkabine
- 2 -: Passagierkabine
- 3 -: Passagiertransporteinrichtung
- 4 -: Bereiche für Sitzanordnungen
- 5 -: Bereiche für Stehplatzanordnungen
- 6 -: Stehplätze
- 6A, 6B, 6C -: Stehplatzreihen
- 7 -: Halteeinrichtung
- 8 -: Sitzplätze
- 9 -: Gepäckfächer
- 10, 10' -: Stützprofile
- 11 -: Stützwand
- 12 -: Kabinenfußboden
- 13 -: Kabinendecke
- 14 -: Sicherheitsmittel
- 15 -: Drei-Punkt-Sicherheitsgurt
- 16 -: Hilfssitz

## Patentansprüche

1. Flugzeugpassagierkabine (2) mit einer Passagiertransportvorrichtung (3), **dadurch gekennzeichnet, daß** die Passagiertransportvorrichtung (3) als mindestens ein Stehplatz (6) ausgebildet ist, wobei der Stehplatz (3) in Bereichen (5) mit einer Mindeststehhöhe innerhalb der Passagierkabine (2) angeordnet ist und mit mindestens einer Halteeinrichtung (7) ausgestattet ist, wobei die Halteeinrichtung (7) als Stützstruktur zur Aufnahme von Beschleunigungen in horizontaler und vertikaler Richtung ausgebildet ist, die weiterhin Sicherheitsmittel (14) umfaßt.

2. Passagiertransportvorrichtung nach Anspruch 1, **dadurch gekennzeichnet, daß** der mindestens eine Stehplatz (6) in Kombination mit an sich bekannten Sitzplatzanordnungen (8) in der Passagierkabine vorgesehen ist.

3. Passagiertransportvorrichtung nach einem der Ansprüche 1 oder 2, **dadurch gekennzeichnet, daß** bei einer Kombination von Sitzplatzanordnungen und Stehplatzanordnungen die Sitzplätze (8) in Bereichen (4) der Passagierkabine (2) mit niedriger Deckenhöhe oder unterhalb von Gepäckablagen (9) und die Stehplätze (6) in Bereichen (5) der Passagierkabine (2) mit Mindeststehhöhe vorgesehen sind.

4. Passagiertransportvorrichtung nach einem der Ansprüche 1 bis 3, **dadurch gekennzeichnet, daß** in Bereichen (5) mit Mindeststehhöhe nebeneinander angeordnete Stehplätze (6, 6', 6") Stehplatzreihen (6A, 6B, 6C) bilden.

5. Passagiertransportvorrichtung nach einem der Ansprüche 1 bis 4, **dadurch gekennzeichnet, daß** die Halteeinrichtung (7) innerhalb der Passagierkabine (2) so ausgerichtet ist, daß der an der Halteeinrichtung (7) zu sichernde Passagier entgegen der Flugrichtung steht.

6. Passagiertransportvorrichtung nach einem der Ansprüche 1 bis 5, **dadurch gekennzeichnet, daß** die Halteeinrichtung (7) als Stütze, Lehne oder Stützwand ausgebildet ist, die innerhalb der Passagierkabine (2) im wesentlichen senkrecht zur Flugrichtung ausgerichtet ist zur Abstützung im Rückenbereich des Passagiers.

7. Passagiertransportvorrichtung nach einem der Ansprüche 1 bis 6, **dadurch gekennzeichnet, daß** die Halteeinrichtung (7) Stützprofile (10, 10') und eine dazwischenliegende Stützwand (11) aufweist, wobei die Stützpofile (10, 10') an strukturfesten Bauteilen angeordnet sind und das Sicherheitsmittel als Sicherheitsgurt (15) ausgebildet ist.

8. Passagiertransportvorrichtung nach Anspruch 7, **dadurch gekennzeichnet, daß der** Sicherheitsgurt (15) als Drei-Punkt-Sicherheitsgurt ausgebildet ist.

9. Passagiertransportvorrichtung nach einem der Ansprüche 1 bis 8, **dadurch gekennzeichnet, daß** die Halteeinrichtung (7) einen Hilfssitz (16) zur Abstützung des Passagiers umfaßt.

## Claims

1. Aircraft passenger cabin (2) having a passenger-transporting device (3),
**characterised in that** said passenger-transporting device (3) is constructed as at least one standing space (6), said standing space (3) being disposed in regions (5) having a minimum standing height within the passenger cabin (2) and being equipped with at least one holding apparatus (7), said holding apparatus (7) being constructed as a supporting structure for absorbing accelerations in the horizontal and vertical directions, which structure also comprises safety means (14).

2. Passenger-transporting device according to claim 1,
**characterised in that** the at least one standing space (6) is provided in combination with seating-space arrangements (8) in the passenger cabin which are known *per se.*

3. Passenger-transporting device according to one of claims 1 or 2,
**characterised in that**, in the case of a combination of seating-space arrangements and standing-space arrangements, the seating spaces (8) are provided in regions (4) of the passenger cabin (2) having a lower ceiling height or underneath luggage repositories (9), and the standing spaces (6) are provided in regions (5) of the passenger cabin (2) having a minimum standing height.

4. Passenger-transporting device according to one of claims 1 to 3,
**characterised in that**, in regions (5) having a minimum standing height, standing spaces (6, 6', 6") which are disposed side by side form rows of standing spaces (6a, 6B, 6C).

5. Passenger-transporting device according to one of claims 1 to 4,
**characterised in that** the holding apparatus (7) is oriented within the passenger cabin (2) in such a way that the passenger to be secured against the holding apparatus (7) stands in a manner opposed to the direction of flight.

6. Passenger-transporting device according to one of claims 1 to 5,
**characterised in that** the holding apparatus (7) is constructed as a support, backrest or supporting wall which is oriented within the passenger cabin (2) substantially perpendicularly to the direction of flight for the purpose of providing support in the region of the passenger's back.

7. Passenger-transporting device according to one of claims 1 to 6,
**characterised in that** the holding apparatus (7) has supporting profiles (10, 10') and a supporting wall (11) lying between them, said supporting profiles (10, 10') being disposed on components integral with the structure, and the safety means being constructed as a safety belt (15).

8. Passenger-transporting device according to claim 7,
**characterised in that** the safety belt (15) is constructed as a three-point safety belt.

9. Passenger-transporting device according to one of claims 1 to 8,
**characterised in that** the holding apparatus (7) comprises an auxiliary seat (16) for supporting the passenger.

## Revendications

1. Cabine (2) d'avion de transport de passagers comportant un dispositif de transport de passagers (3), **caractérisée par le fait que** le dispositif de transport de passagers (3) est agencé sous forme d'au moins une place debout (6), la place debout (3) étant disposée dans des zones (5) qui présentent une hauteur debout minimale à l'intérieur de la cabine à passagers (2) et étant équipée d'au moins un dispositif de retenue (7), le dispositif de retenue (7) étant conformé en structure d'appui pour supporter des accélérations dans les directions verticale et horizontale, qui comprend des moyens de sécurité (12).

2. Dispositif de transport de passagers selon la revendication 1, **caractérisé par le fait que** la place debout (6), au nombre d'au moins une, est prévue en combinaison avec des agencements de places assises (8) connus dans la cabine à passagers.

3. Dispositif de transport de passagers selon une des revendications 1 ou 2, **caractérisé par le fait que** dans une combinaison d'agencements de places assises et d'agencements de places debout, les places assises (8) sont prévues dans des zones à hauteur sous plafond plus faible ou sous des coffres à bagages (9) et les places debout (6) sont prévues dans des zones (5) de la cabine à passagers (2) présentant une hauteur debout minimale.

4. Dispositif de transport de passagers selon une des revendications 1 à 3, **caractérisé par le fait que** dans des zones (5) présentant une hauteur debout minimale, des places debout (6, 6', 6") disposés les unes à côté des autres forment des rangées de places debout (6A, 6B, 6C).

5. Dispositif de transport de passagers selon une des revendications 1 à 4, **caractérisé par le fait que** le dispositif de retenue (7) à l'intérieur de la cabine à passagers (2) est agencé de telle sorte que le passager à attacher au dispositif de retenue se tienne dos tourné à la direction de vol.

6. Dispositif de transport de passagers selon une des revendications 1 à 5, **caractérisé par le fait que** le dispositif de retenue (7) est agencé sous forme d'appui, de dossier ou de paroi d'appui orienté essentiellement perpendiculairement à la direction de vol dans la cabine à passagers pour former un soutien dans la région du dos du passager.

7. Dispositif de transport de passagers selon une des revendications 1 à 6, **caractérisé par le fait que** le dispositif d'appui (7) comporte des profilés d'appui (10, 10') et une paroi d'appui (11) placée entre ceux-ci, les profilés d'appui (10, 10') étant disposés sur des éléments solidaires de la structure et le moyen de sécurité étant conformé en ceinture de sécurité (15).

8. Dispositif de transport de passagers selon la revendication7, **caractérisé par le fait que** la ceinture de sécurité (15) est conformée en ceinture à trois points d'attache.

9. Dispositif de transport de passagers selon une des revendications 1 à 8, **caractérisé par le fait que** le dispositif de retenue (7) comprend un siège d'appoint (16) pour soutenir le passager.
